# EUROPEAN PATENT SPECIFICATION

(11) **EP 0 271 934 B1**
(45) Date of publication and mention of the grant of the patent: **13.09.1995**
(21) Application number: 87202142.3
(22) Date of filing: 05.11.1987
(51) Int. Cl.: H04B 10/00, H04B 10/142

(54) **Device for optical heterodyne detection of an optical signal beam and optical transmission system provided with such a device**
Gerät zur optischen Überlagerungsdetektion eines optischen Signalstrahls und optisches Übertragungssystem mit einem solchen Gerät
Appareil de détection optique hétérodyne d'un faisceau de signal optique et système de transmission optique muni d'un tel appareil

(30) Priority: 12.11.1986 NL 8602864
(43) Date of publication of application: 22.06.1988
(73) Proprietor: Philips Electronics N.V., 5621 BA Eindhoven (NL)
(72) Inventor: Khoe, Giok Djan, NL-5656 AA Eindhoven (NL); Mahon, Cathal John, NL-5656 AA Eindhoven (NL)
(74) Representative: Peters, Rudolf Johannes

(56) References cited:
- EP-A- 0 250 819
- EP-A- 0 260 745
- PATENT ABSTRACTS OF JAPAN, vol. 8, no. 243 (E-277)[1680], 8th November 1984; & JP-A-59 122 140
- ELECTRONICS LETTERS, vol. 21, no. 2, 17th January 1985, pages 52,53, Stevenage, Herts, GB; T. IMAI et al.: "Optical polarisation control utilising an optical heterodyne detection scheme"

## Description

The invention relates to a device for optical heterodyne detection of an optical signal beam, comprising a local oscillator unit emitting a circularly polarised local oscillator beam, a beam-combining element for combining the signal beam with the local oscillator beam, a polarisation-sensitive beam splitter for splitting the combined beam into two linearly and orthogonally polarised components, and two opto-electric converters which are arranged in the radiation paths of the two linearly polarised components, respectively.

The invention also relates to an optical transmission system provided with such a device.

A device of this type is known from "Patents Abstracts of Japan", Vol. 8, No. 243, pp 107E277, Kokai No. 59-122.140.

As compared with direct detection of a signal beam, heterodyne detection provides considerable advantages relating to the signal-to-noise ratio and the discrimination of background radiation. The principle of heterodyne detection of optical radiation has been described extensively in the Article "Optical Heterodyne Detection" by O.E. DeLange in the journal "IEEE Spectrum" of October 1968, pp 77-85. As is stated in this Article it is important that the states of polarisation of the modulated signal beam and of the local oscillator beam correspond as much as possible. To achieve this, a polarisation control is necessary, because optical transmission systems use optical waveguides or optical fibres which have a disturbing influence on the state of polarisation of the radiation propagating therein. These fibres, which may be several dozen to several hundred kilometres long, are subjected to uncontrollable external influences such as temperature and pressure variations so that the disturbance of the state of polarisation may vary in time. A signal beam linearly polarised at the input of the transmission fibre will generally be distorted at the output to an elliptically polarised beam whose ellipticity and direction of the major axis vary in time.

By using a circularly polarised local oscillator beam instead of a linearly polarised one in a so-called heterodyne "diversity" detection device, a heterodyne detection device can be realised in which the state of polarisation of the local oscillator beam is not dynamically controlled and in which nevertheless the signal intensity and the signal-to-noise ratio vary to a slight extent only. For an optimum detection the state of polarisation of the circularly polarised local oscillator beam should be at least substantially maintained during the transmission to the beam combining element, or else the quality of the ultimate output signal will be degraded. This requirement leads to a restriction in the number of possible constructions of such a detection device, because the trajectory followed and external influences disturb the state of polarisation in the conventionally used optical fibres.

It is an object of the invention to provide a device for optical heterodyne detection of an optical signal beam in which the quality of the output signal cannot be substantially influenced, because disturbances of the local oscillator beam are restricted to a minimum for a large number of possible constructions of the detection device.

To this end the device according to the invention is characterized in that an optical fibre which is substantially isotropic with respect to the state of polarisation is arranged in the radiation path between the local oscillator unit and the beam-combining element. Since such a fibre does not have any intrinsic properties affecting the state of polarisation, a great flexibility in the construction of the optical heterodyne detection device is possible.

The spun fibres described by A.J. Barlow et al. in the Article "Birefringence and polarization mode-dispersion in spun single-mode fibres" in Applied Optics, Vol 20, No. 17, pp. 2962-2968, 1 September 1981, are fibres which are substantially isotropic with respect to the state of polarisation. These spun fibres exert considerably less intrinsic influence on the state of polarisation as a function of temperature and wavelength than the conventional mono-mode optical fibres.

An embodiment of the device according to the invention is characterized in that the beam-combining element is a directional fibre-optic coupler. With this element a combination of the signal beam and of the local oscillator beam can be established without coupling losses at the entrance and exit faces of the coupler.

A device according to the invention may be further characterized in that polarisation-sensitive beam splitters are arranged in the radiation paths of radiation emerging from two outputs of a beam-combining element, in that an opto-eletric converter is arranged in each of the radiation paths of the beam components emerging from the polarisation-sensitive beam splitters, and in that the outputs of the converters in the radiation paths of equally polarised components are connected to inputs of one and the same differential amplifier. By using balanced detection, substantially all radiation entering the beam-combining element is ultimately detected. The beam-combining element is preferably formed in such a manner that radiation from each of the two inputs is equally distributed over the two outputs.

The invention also relates to an optical transmission system comprising a radiation source unit for generating a linearly polarised signal beam modulated with an information signal, an optical transmission fibre transmitting the signal beam and a detection device reducing the carrier frequency of the signal beam. The optical transmission system according to the invention is characterized in that the detection device is a device for optical heterodyne detection of a signal beam in accordance with any one of the above-mentioned embodiments. The radiation source unit comprises, for example, a semiconductor laser making it possible to generate a frequency-modulated signal beam by modulating the current passed therethrough. Alternatively, the radiation source unit may comprise a separate modulator for phase- or frequency-modulation of the signal beam.

The invention will now be described in greater detail by way of example with reference to the accompanying drawings, in which
Figure 1 shows diagrammatically an embodiment of an optical heterodyne detection device according to the invention,
Figure 2 shows diagrammatically a further embodiment using balanced detection and,
Figure 3 shows diagrammatically an optical transmission system according to the invention.

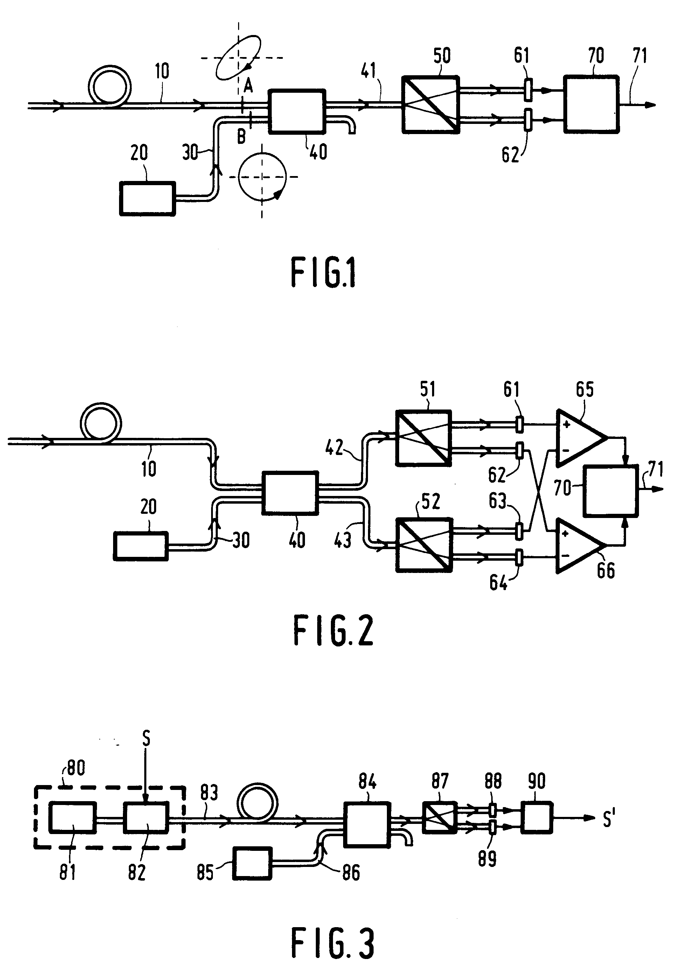

In Figure 1 the reference numeral 10 denotes the end of a long-distance optical transmission fibre. A local oscillator unit 20 generates a circularly polarised local oscillator beam. The local oscillator unit 20 is, for example, a semiconductor laser with a subsequent λ/4-plate placed in a diagonal position or with a subsequent linearly birefringent optical fibre of suitable length. The circularly polarised optical radiation originating from the local oscillator unit 20 is passed through the fibre 30 to one of the two inputs of the beam-combining element 40. The other input of this element receives the signal beam from the long-distance transmission fibre 10. Due to influences acting on the long-distance transmission fibre, such as temperature and voltage variations, the state of polarisation of the radiation beam transmitted by the fibre, which beam is linear at the input, is affected so that the beam transmitted will be generally elliptically polarised at the output of the fibre, the ellipticity and the direction of the major axis varying in time. In Figure 1 a possible state of polarisation is shown diagrammatically at "A".

According to the invention the fibre 30 is a spun fibre or another optical fibre which is substantially isotropic with respect to the state of polarisation. In Figure 1 the state of polarisation of the radiation emerging from the fibre is shown diagrammatically at "B". A great extent of flexibility in the construction of the detection device is obtained by using such a fibre.

Element 40 may be, for example a semi-transparent mirror. However, in order to prevent signal loss as much as possible, element 40 is preferably asymmetric, that is to say, the combined radiation beam in the output 41 comprises a large portion of the signal radiation and only a small fraction of the local oscillator radiation. In the drawing, element 40 is shown as a directional fibre-optic coupler, but this element may be alternatively, for example a partially-transparent mirror. The composite beam emerging from the element 40 is subsequently split in a polarisation-sensitive beam splitter 50, for example a Wollaston-prism, into two linearly and orthogonally polarised components. Each of the two components is separately detected in one of the opto-electric converters 61 and 62, for example, radiation-sensitive diodes. The output signals of the converters are added to the detection circuit 70 in which these signals, if necessary after a phase correction, are added to the final signal 71.

Figure 2 shows an alternative possibility of detecting the composite beam. In this case the radiation from the two outputs of the coupler is used. As in Figure 1, the reference numeral 10 in Figure 2 denotes the end of an optical fibre through which a signal beam is transmitted, the reference numeral 20 denotes a local oscillator unit, the reference numeral 30 denotes the spun fibre and the reference numeral 40 denotes a beam-combining element. The radiation originating from the signal beam and from the local oscillator is preferably distributed equally over the two outputs 42 and 43 of the coupler. The beam emerging from each of the two outputs is added to one of two polarisation-sensitive beam splitters 51 and 52, respectively, each splitting the incoming beam into two linearly and orthogonally polarised components which are detected in the opto-electric converters 61, 62 and 63, 64, respectively. The converters 61 and 63 detecting, for example the horizontally polarised components add their output signals to the differential amplifier 65. The outputs of the converters 62 and 64 detecting the vertically polarised components are connected to the inputs of the differential amplifier 66. Since the beams from the two outputs 42 and 43 of the element 40 have opposite phases, the AC-components are added together in the differential amplifiers 65 and 66, whereas the DC-components of output signals of the converters are cancelled. The output signals of the differential amplifiers 65 and 66 are added to the circuit 70 which supplies the final signal 71.

Figure 3 shows an optical transmission system in which the invention is used. A radiation source unit 80 comprises a radiation source 81, for example, a semiconductor laser which emits radiation which is modulated in the electro-optic modulator 82 with the information signal S. Alternatively, the radiation source unit may comprise only a semiconductor laser which emits a signal beam whose frequency is modulated by changing the current passed through the laser. The optical signal is transmitted through the long-distance transmission fibre 83 to one of two inputs of the optic coupler 84. The other input of the coupler 84 is connected to the output of a local oscillator unit via a spun fibre 86. In the manner as described with reference to Figures 1 and 2 the radiation from one or from both outputs of the coupler is split into horizontally and vertically polarised components by the polarisation-sensitive beam splitter 87. Each of the components is detected by one of the opto-electric converters 88 and 89. From the output signals thereof, the output signal S′ is determined in the circuit 90.

## Claims

1. A device for optical heterodyne detection of an optical signal beam (10), comprising a local oscillator unit (20; 85) emitting a circularly polarised local oscillator beam (30; 86), a beam-combining element (40; 84) for combining the signal beam with the local oscillator beam, a polarisation-sensitive beam splitter (50; 51, 52; 87) for splitting the combined beam (41) into two linearly and orthogonally polarised components, and two opto-electric converters (61, 62; 63, 64; 88, 89) which are arranged in the radiation paths of the two linearly polarised components, respectively, characterized in that an optical fibre (30; 86) which is substantially isotropic with respect to the state of polarisation is arranged in the radiation path between the local oscillator unit (20; 85) and the beam-combining element (40; 84).

2. A device as claimed in Claim 1, characterized in that the beam-combining element is a directional fibre-optic coupler (40; 84).

3. A device as claimed in Claim 1 or 2, characterized in that polarisation-sensitive beam splitters (51, 52) are arranged in the radiation paths of radiation emerging from two outputs of a beam-combining element (40), in that an opto-electric converter (61, 62, 63, 64) is arranged in each of the radiation paths of the beam components emerging from the polarisation-sensitive beam splitters (51, 52), and in that the outputs of the converters (61, 63; 62, 64) in the radiation paths of equally polarised components are connected to inputs of one and the same differential amplifier (65; 66).

4. An optical transmission system comprising a radiation source unit (80) for generating a linearly polarised signal beam modulated with an information signal (S), an optical transmission fibre (83) transmitting the signal beam and a detection device reducing the carrier frequency of the signal beam, characterized in that the detection device is a device (85, 86, 84, 87, 88, 89, 90) for optical heterodyne detection of a signal beam as claimed in any one of the preceding Claims.

## Patentansprüche

1. Anordnung zur optischen Überlagerungsdetektion eines optischen Signalstrahlenbündels (10), mit einer ein zirkular polarisiertes Strahlenbündel eines lokalen Oszillators aussendenden lokalen Oszillatoreinheit (20; 85), einem strahlenzusammenführenden Element (40; 84) zum Zusammenführen des Signalstrahlenbündels mit dem Strahlenbündel des lokalen Oszillators, einem polarisationsempfindlichen Strahlteiler (50; 51, 52; 87) zum Aufspalten des zusammengeführten Strahlenbündels (41) in zwei linear und zueinander senkrecht polarisierte Komponenten und zwei optoelektrische Wandler (61, 62, 63, 64; 88, 89), die in den jeweiligen Strahlungswegen der beiden linear polarisatierten Komponenten liegen, dadurch gekennzeichnet, daß eine bezüglich des Polarisationszustandes nahezu isotrope optische Faser (30; 86) in dem Strahlungsweg zwischen der lokalen Oszillatoreinheit (20; 85) und dem strahlenzusammenführenden Element (40; 80) liegt.

2. Anordnung nach Anspruch 1, dadurch gekennzeichnet, daß das strahlenzusammenführende Element ein direktionaler faseroptischer Koppler (40; 84) ist.

3. Anordnung nach Anspruch 1 oder 2, dadurch gekennzeichnet, daß in den Strahlungswegen von aus zwei Ausgängen eines strahlenzusammenführenden Elementes (40) austretender Strahlung polarisationsempfindliche Strahlteiler (51, 52) angeordnet sind, daß ein optoelektischer Wandler (61, 62, 63, 64) in jedem der Strahlungswege der aus den polarisationsempfindlichen Strahlteilern (51, 52) austretenden Bündelkomponenten angeordnet ist, und daß die Ausgänge der Wandler (61, 62; 63, 64) in den Strahlungswegen gleich polarisierter Komponenten mit Eingängen ein und desselben Differenzverstärkers (65; 66) verbunden sind.

4. System zur optischen Übertragung mit einer Strahlungsquelleneinheit (80) zum Erzeugen eines mit einem Informationssignal (S) modulierten, linear polarisierten Signalstrahlenbündels, einer das Signalstrahlenbündel übertragenden optischen Faser (83) und einer die Trägerfrequenz des Signalstrahlenbündels verringernden Detektionsanordnung, dadurch kennzeichnet, daß die Detektionsanordnung eine Anordnung (85, 86, 84, 87, 88, 89, 90) nach einem der vorhergehenden Ansprüche ist.

## Revendications

1. Dispositif conçu pour la détection optique hétérodyne d'un faisceau de signal optique (10), comportant une unité d'oscillation locale (20; 85) émettant un faisceau d'oscillation local circulairement polarisé (30; 86), un élément de combinaison de faisceau (40; 84) pour combiner le faisceau de signal avec le faisceau d'oscillation local, un diviseur de faisceau sensible à la polarisation (50; 51; 52; 87) pour diviser un faisceau combiné (41) en deux composantes polarisées orthogonalement et linéairement, et deux convertisseurs opto-électriques (61, 62; 63, 64; 88, 89) disposés dans chacun des trajets de rayonnement des deux composantes polarisées linéairement, caractérisé en ce qu'une fibre optique (30; 86) étant sensiblement isotropique relative à l'état de polarisation est disposée dans le trajet de rayonnement s'étendant entre l'unité d'oscillation locale (20; 85) et l'élément de combinaison de faisceau (40; 84).

2. Dispositif selon la revendication 1, caractérisé en ce que l'élément de combinaison de faisceau est constitué d'un coupleur fibro-optique directionnel (40; 84).

3. Dispositif selon la revendication 1 ou 2, caractérisé en ce que des diviseurs de faisceau sensibles à la polarisation (51, 52) sont disposés dans les trajets de rayonnement du rayonnement provenant de deux sorties de l'élément de combinaison de faisceau (40), en ce qu'un convertisseur opto-électrique (61, 62, 63, 64) est disposé dans chacun des trajets de rayonnement des composantes de faisceau sortant des diviseurs de faisceau sensibles à la polarisation (51, 52), et en ce que les sorties des convertisseurs (61, 63; 62, 64) intercalées dans les trajets de rayonnement de composantes polarisées de façon égale sont connectées à des entrées d'un seul et même amplificateur différentiel (65; 66).

4. Système de transmission optique comportant une unité de source de rayonnement (80) pour engendrer un faisceau de signal polarisé linéairement modulé avec un signal d'information S, une fibre de transmission optique (83) transmettant le faisceau de signal, et un dispositif de détection réduisant la fréquence porteuse du faisceau de signal, caractérisé en ce que le dispositif de détection est un dispositif (85, 86, 84, 87, 88, 89, 90) conçu pour la détection optique hétérodyne d'un faisceau de signal selon l'une quelconque des revendications précédentes.
